# EUROPÄISCHE PATENTSCHRIFT

(11) **EP 3 471 888 B1**
(45) Veröffentlichungstag und Bekanntmachung des Hinweises auf die Patenterteilung: **11.03.2020**
(21) Anmeldenummer: 16748285.0
(22) Anmeldetag: 29.07.2016
(51) Int. Cl.: B02C 25/00, H02P 1/30, H02P 27/04

(54) **VERFAHREN ZUM ANSTEUERN EINES MOTORS ZUM ANFAHREN EINER MÜHLE**
METHOD OF CONTROLLING A MOTOR TO START A MILL
PROCÉDÉ DE COMMANDE D'UN MOTEUR POUR DÉMARRER UN BROYEUR

(43) Veröffentlichungstag der Anmeldung: 24.04.2019
(73) Patentinhaber: Siemens Aktiengesellschaft, 80333 München (DE)
(72) Erfinder: KITZ, Werner, 91056 Erlangen (DE)
(86) Internationale Anmeldenummer: PCT/EP2016/068182
(87) Internationale Veröffentlichungsnummer: WO 2018/019386

(56) Entgegenhaltungen:
- EP-A2- 2 096 748
- DE-A1-102014 011 846
- JP-A- 2001 169 576

## Beschreibung

Die Erfindung betrifft ein Verfahren zum Ansteuern eines Motors zum Anfahren einer Mühle mit Mahlgut.

Darüber hinaus betrifft die Erfindung eine Steuervorrichtung zur Durchführung eines derartigen Verfahrens.

Außerdem betrifft die Erfindung eine Antriebsvorrichtung mit mindestens einer derartigen Steuervorrichtung.

Ferner betrifft die Erfindung eine Mühlenanordnung mit mindestens einer derartigen Antriebsvorrichtung.

Mühlen, insbesondere vertikale Mühlen, werden vorzugsweise zum Mahlen von Materialien wie Erz eingesetzt. Es kommt vor, dass der Betrieb einer zumindest teilweise mit einem Mahlgut beladenen Mühle für eine längere Zeitdauer unterbrochen wird und die Mühle stillsteht. Dies geschieht beispielsweise aus Wartungsgründen. Während des Stillstands der Mühle kann sich das Mahlgut in der Mühle verfestigen. Ein derartiges Sedimentieren des Mahlguts führt zu einem sehr hohen Anfahrmoment. Daher müssen die verwendeten Elektroantriebe, insbesondere hinsichtlich des maximalen Drehmoments bei kleinen Drehzahlen bis Drehzahl Null, stark überdimensioniert werden, wodurch diese Elektroantriebe sehr teuer sind.

Durch langsames Bewegen, beispielsweise eines Rührstabes, einer Spindel, einer Schnecke oder eines anderen Werkzeuges, wird beim Sedimentieren entwichenes Wasser wieder in das Mahlgut eingebracht, die Sedimentierung wird aufgelöst und das erforderliche Anfahrmoment sinkt erheblich ab. Ebenso kann durch gelegentliches langsames Drehen das Sedimentieren verhindert werden.

Die Patentschrift EP 1 735 099 B1 offenbart ein Verfahren zum Lösen einer festgeklebten Ladung von der Innenwand eines Mahlrohrs einer Rohrmühle, wobei die Antriebsvorrichtung des Mahlrohrs zum gezielten Lösen der festgeklebten Ladung von einer Steuervorrichtung angesteuert wird. Das Mahlrohr wird dabei derart gezielt gedreht, dass sich durch die mehrmalige Änderung der Drehgeschwindigkeit des Mahlrohrs und gegebenenfalls durch das abrupte Abbremsen des Mahlrohrs die festgeklebte Ladung von der Innenwand des Mahlrohrs löst.

Die Offenlegungsschrift WO 2012/110358 A1 offenbart ein Antriebssystem für eine von einem Motor mit Schleifringläufer angetriebene Kugelmühle, wobei dem Motor ein dessen Drehmoment mit einer weiteren Kenngröße in Beziehung setzendes Kennlinienfeld mit mindestens zwei verschiedenen Kennlinien zugeordnet ist. Darüber hinaus weist das Antriebssystem ein Schaltelement auf, das das Antriebssystem bei einem konstanten Wert der Kenngröße sprunghaft zwischen den beiden Kennlinien umschaltet. DE 102014011846 A1 und EP 2096748 A2 offenbaren Antriebsanordnungen für einen Elektromotor mit einem Frequenzumrichter, wobei nach dem Anfahren der Motor direkt mit einem Netz verbunden wird.

Der Erfindung liegt die Aufgabe zugrunde, ein, im Vergleich zum Stand der Technik, kosteneffizienteres Anfahren einer Mühle zu ermöglichen.

Diese Aufgabe wird erfindungsgemäß durch ein Verfahren zum Ansteuern eines Motors zum Anfahren einer Mühle mit Mahlgut gelöst, wobei der Motor zur Auflösung einer Sedimentierung des Mahlguts der Mühle zunächst von einem ersten Umrichter gespeist wird, anschließend der Motor vom ersten Umrichter getrennt wird, und in einem weiteren Schritt der Motor mit einem ersten Netz verbunden wird, welches eine erste Netzspannung aufweist und wobei die maximale Ausgangsspannung des ersten Umrichters geringer als die erste Netzspannung ist.

Darüber hinaus wird die Aufgabe erfindungsgemäß durch eine Steuervorrichtung, die zur Durchführung eines derartigen Verfahrens eingerichtet ist, gelöst.

Außerdem wird die Aufgabe erfindungsgemäß durch eine Antriebsvorrichtung mit mindestens einer derartigen Steuervorrichtung gelöst.

Ferner wird die Aufgabe erfindungsgemäß durch eine Mühlenanordnung mit mindestens einer derartigen Antriebsvorrichtung gelöst.

Die in Bezug auf das Verfahren nachstehend angeführten Vorteile und bevorzugten Ausgestaltungen lassen sich sinngemäß auf die Steuervorrichtung, die Antriebsvorrichtung und die Mühlenanordnung übertragen.

Die Erfindung basiert auf der Idee, die bekannten physikalischen Zusammenhänge zwischen Drehmoment und Strom sowie zwischen Drehzahl und Spannung zu nutzen, um die Kosten für das Anfahren der Mühle zu senken. Der Motor der Mühle wird in einem Mahlbetrieb, insbesondere mit konstanter Frequenz, aus einem ersten Netz betrieben. Für den Anlauf mit einem erhöhten Drehmoment, beispielsweise aufgrund einer Verfestigung der Ladung, die Sedimentierung genannt wird, und einer niedrigen Drehzahl wird ein erster Umrichter mit einer maximalen Ausgangsspannung verwendet, welche niedriger ist als die erste Netzspannung des ersten Netzes. Insbesondere nach dem Auflösen der Sedimentierung in der Mühle, insbesondere bei einer definierten Drehzahl, wird der erste Umrichter vom Motor abgekoppelt. Nach dem Auflösen der Sedimentierung ist das für den Anlauf der Mühle erforderliche Drehmoment deutlich geringer. Für den weiteren Mahlvorgang ist jedoch eine höhere Drehzahl erforderlich, weswegen der Motor eine höhere Spannung benötigt. Deshalb wird der Motor für den weiteren Betrieb an das erste Netz angeschlossen. Bei gleichem Ausgangsstrom ist ein derartiger erster Umrichter mit einer maximalen Ausgangsspannung, die niedriger als die erste Netzspannung des ersten Netzes ist, kostengünstiger als insbesondere ein Umrichter, welcher eine maximale Ausgangsspannung aufweist, die der ersten Netzspannung des ersten Netzes entspricht. Ferner ist bei einem derartigen ersten Umrichter die Netzbelastung durch die geringere Leistungsaufnahme geringer.

In einer bevorzugten Ausgestaltung wird die maximale Ausgangsspannung des ersten Umrichters als maximal 50% der ersten Netzspannung des ersten Netzes festgelegt. Das Verhältnis aus maximaler Ausgangsspannung des ersten Umrichters zur ersten Netzspannung ist abhängig von der Art und Größe der Mühlenanordnung sowie von der zu mahlenden Ladung der Mühle. Durch ein Verhältnis von maximal 50% ergibt sich eine gute Kostenposition für den ersten Umrichter und die Drehzahl ist ausreichend hoch zum Lösen der Sedimentierung.

Bevorzugt wird der Motor während der Verbindung mit dem ersten Netz mit einer konstanten Nennfrequenz betrieben, wobei die Nennfrequenz größer als eine maximale Ausgangsfrequenz des ersten Umrichters ist. Ein Betrieb mit einer konstanten Nennfrequenz, insbesondere direkt aus dem ersten Netz, ist kostengünstig, da für den Mahlbetrieb in der Regel kein weiterer Umrichter erforderlich ist. Zum Lösen der Sedimentierung ist es ausreichend, wenn die Drehzahl, welche von der Ausgangsfrequenz des ersten Umrichters bestimmt wird, geringer als die, insbesondere konstante, Drehzahl während des Mahlbetriebs ist. Ein derartiger erster Umrichter ist kostengünstig.

Zweckdienlicherweise wird die maximale Ausgangsfrequenz des ersten Umrichters als maximal 30% der Nennfrequenz des ersten Netzes festgelegt. Erfahrungsgemäß hat sich ein derartiges maximales Verhältnis zwischen maximaler Ausgangsfrequenz des ersten Umrichters und Nennfrequenz als besonders vorteilhaft erwiesen.

Auf besonders vorteilhafte Weise wird der erste Umrichter aus einem zweiten Netz mit einer zweiten Netzspannung betrieben. Insbesondere ist eine zweite Netzspannung des zweiten Netzes geringer als eine erste Netzspannung des ersten Netzes. Beispielsweise liegt die zweite Netzspannung im Bereich von bis 1.000 Volt, während die erste Netzspannung im Bereich von bis 15.000 Volt liegt. Ein Betrieb aus einem derartigen zweiten Netz mit niedrigerer zweiter Netzspannung ist effizient und kostengünstig.

In einer bevorzugten Ausführung wird der Motor nach der Trennung vom ersten Umrichter und vor der Verbindung mit dem ersten Netz mit einem zweiten Umrichter verbunden, dessen maximale Ausgangsspannung der ersten Netzspannung entspricht. Insbesondere, falls die Netzbelastung nach dem Lösen der Sedimentierung mit Hilfe des ersten Umrichters noch immer zu hoch ist, wird der zweite Umrichter verwendet, um den Motor am Netz auf die Frequenz des ersten Netzes hochzufahren. Insbesondere ist der zweite Umrichter für die Motornenndaten mit nur geringer Überlast ausgelegt und muss nicht für den hohen Strom, der zum Lösen der Sedimentierung des Mahlguts erforderlich ist, spezifiziert sein. Ein derartiger zweiter Umrichter ist zusammen mit dem ersten Umrichter noch immer kostengünstiger als ein einzelner Umrichter, der für den kompletten Strombereich und Spannungsbereich ausgelegt ist und damit sowohl das Lösen der Sedimentierung als auch den konventionellen Mahlbetrieb ermöglicht.

Bevorzugt wird der Motor durch den zweiten Umrichter mit dem ersten Netz synchronisiert. Insbesondere passt der zweite Umrichter die Phasenlage und/oder die Frequenz der Ausgangsspannung an das erste Netz an. Durch eine derartige Synchronisierung kann der Motor netzfreundlich, das heißt beispielsweise ohne starke Unstetigkeiten im Strom und/oder in der Spannung, an das erste Netz geschaltet werden.

Bei einer bevorzugten Ausgestaltung sind mindestens zwei Motoren, welche jeweils einer Mühle zugeordnet sind, zeitversetzt zumindest mit dem ersten Umrichter verbunden. Da der erste Umrichter insbesondere zum Lösen einer sedimentierten Ladung in einer Mühle erforderlich ist, ist es kostengünstig, den ersten Umrichter mehreren Mühlen zeitversetzt zur Verfügung zu stellen.

Bevorzugt wird als erster Umrichter ein Niederspannungsumrichter eingesetzt. Die maximale Ausgangsspannung des Niederspannungsumrichters liegt bis 1.000 Volt. Der Spannungsbereich bildet erfahrungsgemäß das Optimum aus Leistungsfähigkeit und Kosteneffizienz.

Auf vorteilhafte Weise wird der Niederspannungsumrichter aus einem Niederspannungsnetz betrieben. Ein Betrieb des Niederspannungsumrichters aus einem Niederspannungsnetz ist effizient und kostengünstig.

In einer bevorzugten Ausführung wird als erstes Netz ein Mittelspannungsnetz eingesetzt. Das Mittelspannungsnetz hat eine maximale Spannung im Bereich von bis 15.000 Volt. Ein derartiger Spannungsbereich ist vorteilhaft für eine effiziente Leistungsanbindung einer, insbesondere vertikalen, Mühle, welche beispielsweise zum Mahlen von Erz geeignet ist.

Bei einer bevorzugten Ausgestaltung wird als zweiter Umrichter ein Mittelspannungsumrichter eingesetzt. Ein Mittelspannungsumrichter ist für ein Mittelspannungsnetz optimal.

Im Folgenden wird die Erfindung anhand der in den Figuren dargestellten Ausführungsbeispiele näher beschrieben und erläutert.

Es zeigen:
- FIG 1: eine dreidimensionale Darstellung einer vertikalen Mühlenanordnung,
- FIG 2: einen schematischen Aufbau einer ersten Ausführungsform einer Mühlenanordnung,
- FIG 3: einen schematischen Aufbau einer zweiten Ausführungsform einer Mühlenanordnung und
- FIG 4: einen schematischen Aufbau einer dritten Ausführungsform einer Mühlenanordnung.

Gleiche Bezugszeichen haben in den verschiedenen Figuren die gleiche Bedeutung.

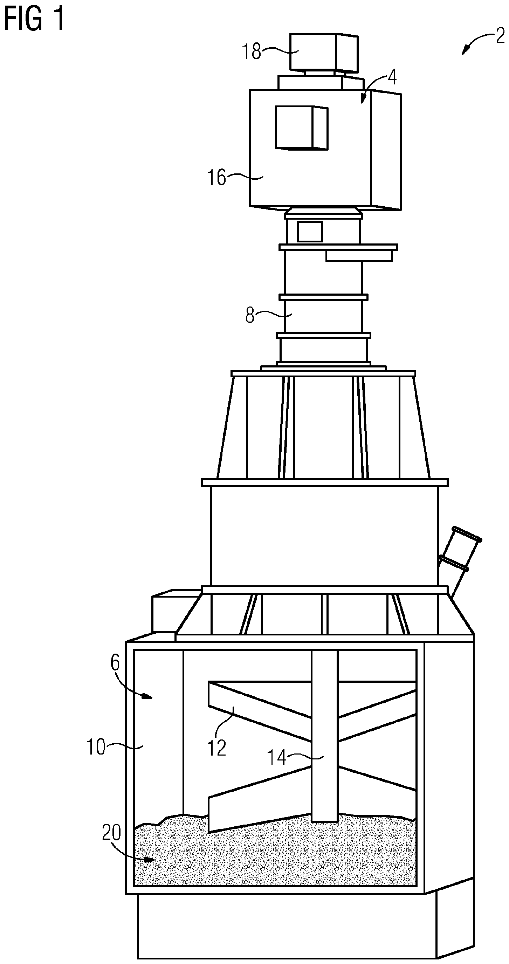

FIG 1 zeigt eine dreidimensionale Darstellung einer vertikalen Mühlenanordnung 2, die eine Antriebsvorrichtung 4 und eine Mühle 6 aufweist. Die Antriebsvorrichtung 4 ist über ein Getriebe 8 mechanisch mit der Mühle 6 verbunden. Die Mühle 6 umfasst einen Mahlbehälter 10, in dem sich ein Mahlwerkzeug 12 befindet. Das Mahlwerkzeug 12 kann als Rührstab, als Spindel, als Schnecke oder anderweitig ausgeführt sein und weist eine Welle 14 auf, welche mit dem Getriebe 8 verbunden ist. Die Welle 14 des Mahlwerkzeugs 12 kann aber auch, beispielsweise über eine Flanschverbindung, direkt mit einer Welle der Antriebsvorrichtung 4 verbunden sein. Die Welle der Antriebsvorrichtung 4, welche in FIG 1 nicht dargestellt ist, wird von einem Motor 16 angetrieben, der bevorzugt von einer Umrichter 18 gespeist wird. Der Umrichter 18 kann auch an einer anderen Stelle, beispielsweise in einem separaten Raum, angeordnet sein. Der Motor 16 ist bevorzugt als Asynchronmotor mit einem Käfigläufer ausgeführt und mit einer Leistung von mindestens 100 Kilowatt betreibbar.

Im Mahlbehälter 10 befindet sich Mahlgut 20, auch Ladung 20 genannt, welches vom Mahlwerkzeug 12 durch eine Rotation der Welle 14 zum Mahlen in Bewegung gebracht wird. Wird der Betrieb einer zumindest teilweise mit Mahlgut 20 beladenen Mühle 6, beispielsweise aus Wartungsgründen, unterbrochen wird und die Mühle steht für eine längere Zeitdauer still, so kann sich während des Stillstands der Mühle das Mahlgut 20 in der Mühle 6 verfestigen. Ein derartiges Sedimentieren des Mahlguts 20 erfordert ein sehr hohes Anfahrmoment, welches vom Motor 16 erzeugt werden muss.

Beispielsweise werden für Mühlen 6, bei denen eine solche Sedimentierung möglicherweise auftritt, Spezialasynchronmotoren mit Kurzschlussläufern und hohem Anfahrmoment oder Schleifringläufermotoren mit erhöhtem Anfahrmoment eingesetzt. Zwar verlangen Schleifringläufermotoren relativ geringe Anlaufströme, allerdings sind diese Schleifringläufermotoren sehr wartungsaufwendig.

Der Umrichter 18 muss für ein derartig hohes Anfahrmoment einen hohen Strom generieren. Gleichzeitig ist für die im Betrieb erforderliche Nenndrehzahl eine hohe Spannung vom Umrichter 18 erforderlich. Bei einem Umrichter 18 sind die Kosten im Wesentlichen durch die Leistung bestimmt. Daher ist ein Umrichter 18, der sowohl für den hohen Strom zur Erzeugung eines großes Anfahrmoments zum Lösen der sedimentierten Ladung 20, als auch für die hohe Spannung zum Betrieb der Mühle 6 bei der Nenndrehzahl geeignet ist, sehr teuer.

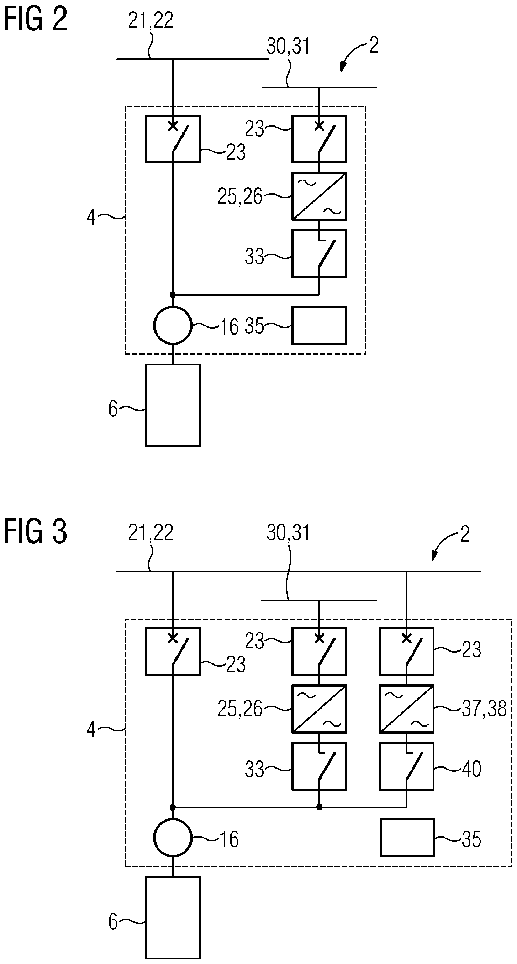

FIG 2 zeigt einen schematischen Aufbau einer ersten Ausführungsform einer Mühlenanordnung 2. Wie in FIG 1 gezeigt ist ein Motor 16 einer Antriebsvorrichtung 4 mit einer Mühle 6 mechanisch verbunden, wobei sich zwischen Motor 16 und Mühle 6 ein Getriebe 8 befinden kann. Der Motor 16 ist mit einem ersten Netz 21 verbindbar. Das erste Netz 21 ist, um ausreichend Leistung für die Mühlenanordnung 2 zur Verfügung stellen zu können, als Mittelspannungsnetz 22 ausgeführt. Die Verbindung mit dem Mittelspannungsnetz 22 erfolgt über einen Netzschalter 23. Das Mittelspannungsnetz 22 hat eine Netzspannung im Bereich bis 15.000 Volt. Der Motor 16 wird im Mahlbetrieb direkt aus dem Mittelspannungsnetz 22 mit einer konstanten Nennfrequenz 24 betrieben.

Falls sich das Mahlgut 20 in der Mühle 6 verfestigt hat, ist zur Auflösung einer derartigen Sedimentierung des Mahlguts 20 ein, im Vergleich zum normalen Mahlbetrieb, erhöhtes Drehmoment und damit ein höherer Strom erforderlich. Deshalb wird der Motor 16 der Mühle 6 von einem ersten Umrichter 25 gespeist, der als Niederspannungsumrichter 26 ausgeführt ist. Die maximale Ausgangsspannung des Niederspannungsumrichters 26 beträgt allerdings maximal 50% der Netzspannung des Mittelspannungsnetzes 22. Insbesondere liegt die maximale Ausgangsspannung des Niederspannungsumrichters 26 bis 1.000 Volt.

Die maximale Ausgangsfrequenz 28 des Niederspannungsumrichters 26 beträgt maximal 30% der Nennfrequenz 24. Der als Niederspannungsumrichter 26 ausgeführte erste Umrichter 25 wird aus einem zweiten Netz 30 betrieben, welches als Niederspannungsnetz 31 mit einer Spannung bis 1.000 Volt ausgeführt ist. Die Verbindung zum Niederspannungsnetz 31 wird mit einem Netzschalter 23 hergestellt.

Nach dem Lösen der Sedimentierung wird der Motor 16 über einen ersten Schalter 33, welcher beispielsweise als MV-Trenner ausgeführt ist, vom ersten Umrichter 25 getrennt und in einem weiteren Schritt mit dem ersten Netz 21 verbunden. Die Antriebsvorrichtung 4 umfasst eine Steuervorrichtung 35, welche die Schaltvorgänge und den ersten Umrichter 25 steuert.

Die Steuerung 35 erlaubt auch, den Motor 16 nicht an das erste Netz 22 zu verbinden, sondern am Umrichter 27 für den gelegentlichen Betrieb mit geringer Drehzahl zu belassen.

FIG 3 zeigt einen schematischen Aufbau einer zweiten Ausführungsform einer Mühlenanordnung 2, welche im Vergleich zu der Mühlenanordnung 2 in FIG 2 zusätzlich einen zweiten Umrichter 37 aufweist, welcher als Mittelspannungsumrichter 38 ausgeführt ist. Der Mittelspannungsumrichter 38 ist über einen Netzschalter 23 mit dem Mittelspannungsnetz 22 verbindbar. Über einen zweiten Schalter 40 ist der Mittelspannungsumrichter 38 mit dem Motor 16 verbindbar. Die maximale Ausgangsspannung des Mittelspannungsumrichters 38 entspricht im Wesentlichen der Netzspannung des Mittelspannungsnetzes 22.

Wie in FIG 2 gezeigt, wird der Niederspannungsumrichter 26, welcher aus dem Niederspannungsnetz 31 gespeist werden kann, zum Lösen einer sedimentierten Ladung in der Mühle 6 verwendet. Nach dem Lösen der Sedimentierung wird der Motor 16 in FIG 3 mit dem Mittelspannungsumrichter 38 verbunden, welcher seine Ausgangsspannung, bevorzugt kontinuierlich, erhöht und den Motor 16 mit dem Mittelspannungsnetz 22 synchronisiert. Insbesondere werden vom Mittelspannungsumrichter 38 die Phasenlage und/oder die Frequenz der Ausgangsspannung an das Mittelspannungsnetz 22 angepasst. Die Steuervorrichtung 35 steuert die Schaltvorgänge und die beiden Umrichter 25, 37. Die weitere Ausführung der Mühlenanordnung 2 entspricht der aus FIG 2.

Die Steuerung 35 erlaubt es darüber hinaus, den Motor 16 nicht an das erste Netz 22 zu synchronisieren, sondern am zweiten Umrichter 37 für den Betrieb mit der Option einer variablen Drehzahl zu belassen.

Ferner erlaubt die Steuervorrichtung 35, den Motor 16 gelegentlich mit dem ersten Umrichter 25 für den Betrieb mit geringer Drehzahl zu verbinden.

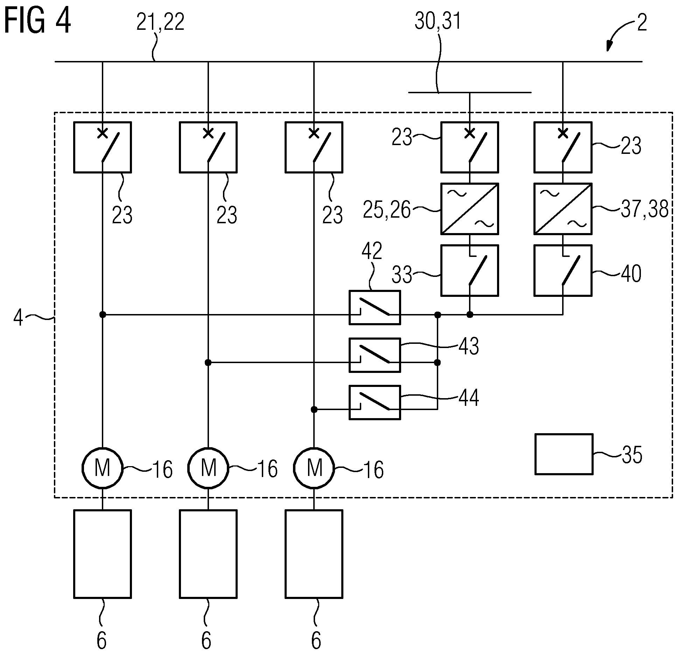

FIG 4 zeigt einen schematischen Aufbau einer dritten Ausführungsform einer Mühlenanordnung 2, die exemplarisch drei Motoren 16 aufweist, die jeweils einer Mühle 6 zugeordnet sind und diese antreiben. Die drei Motoren 16 werden zeitversetzt über Schalter 42, 43, 44 von den Umrichtern 25, 37 angesteuert. Jeder Motor 16 wird zuerst mit dem ersten Umrichter 25 und danach mit dem zweiten Umrichter 37 verbunden, um, wie oben beschrieben, eine Sedimentierung zu lösen und den jeweiligen Motor 16 mit dem Mittelspannungsnetz 22 zu synchronisieren mit der Option, einen Motor 16 am zweiten Umrichter 37 zu belassen.

## Patentansprüche

1. Verfahren zum Ansteuern eines Motors (16) zum Anfahren einer Mühle (6) mit Mahlgut (20),
**dadurch gekennzeichnet, dass**
der Motor (16) zur Auflösung einer Sedimentierung des Mahlguts (20) der Mühle (6) zunächst von einem ersten Umrichter (25) gespeist wird,
anschließend der Motor (16) vom ersten Umrichter (25) getrennt wird,
und in einem weiteren Schritt der Motor (16) mit einem ersten Netz (21) verbunden wird,
welches eine erste Netzspannung aufweist, und
wobei die maximale Ausgangsspannung des ersten Umrichters (25) geringer als die erste Netzspannung ist.

2. Verfahren nach Anspruch 1,
wobei die maximale Ausgangsspannung des ersten Umrichters (25) als maximal 50% der ersten Netzspannung des ersten Netzes (21) festgelegt wird.

3. Verfahren nach einem der Ansprüche 1 oder 2,
wobei der Motor (16) während der Verbindung mit dem ersten Netz (21) mit einer konstanten Nennfrequenz (24) betrieben wird,
wobei die Nennfrequenz (24) größer als eine maximale Ausgangsfrequenz des ersten Umrichters (25) ist.

4. Verfahren nach Anspruch 3,
wobei die maximale Ausgangsfrequenz des ersten Umrichters (25) als maximal 30% der Nennfrequenz (24) des ersten Netzes (21) festgelegt wird.

5. Verfahren nach einem der vorherigen Ansprüche,
wobei der erste Umrichter (25) aus einem zweiten Netz (30) mit einer zweiten Netzspannung betrieben wird.

6. Verfahren nach einem der Ansprüche 1 bis 5,
wobei der Motor (16) nach der Trennung vom ersten Umrichter (25) und vor der Verbindung mit dem ersten Netz (21) mit einem zweiten Umrichter (37) verbunden wird, dessen maximale Ausgangsspannung der ersten Netzspannung entspricht.

7. Verfahren nach Anspruch 6,
wobei der Motor (16) durch den zweiten Umrichter (37) mit dem ersten Netz (21) synchronisiert wird.

8. Verfahren nach einem der vorherigen Ansprüche,
wobei mindestens zwei Motoren (16), welche jeweils einer Mühle (6) zugeordnet sind, zeitversetzt zumindest mit dem ersten Umrichter (25) verbunden werden.

9. Verfahren nach einem der vorherigen Ansprüche,
wobei als erster Umrichter (25) ein Niederspannungsumrichter (26) eingesetzt wird.

10. Verfahren nach Anspruch 9,
wobei der Niederspannungsumrichter (26) aus einem Niederspannungsnetz (31) betrieben wird.

11. Verfahren nach einem der vorherigen Ansprüche,
wobei als erstes Netz (21) ein Mittelspannungsnetz (22) eingesetzt wird.

12. Verfahren nach einem der Ansprüche 6 oder 7,
wobei als zweiter Umrichter (37) ein Mittelspannungsumrichter (38) eingesetzt wird.

13. Steuervorrichtung (35) eingerichtet zur Durchführung eines Verfahrens nach einem der Ansprüche 1 bis 12.

14. Antriebsvorrichtung (4) mit mindestens einer Steuervorrichtung (35) nach Anspruch 13.

15. Mühlenanordnung (2) mit mindestens einer Antriebsvorrichtung (4) nach Anspruch 14.

## Claims

1. Method for controlling a motor (16) for starting a mill (6) containing material to be ground (20),
**characterised in that**
the motor (16) is initially fed by a first converter (25) to remove any sedimentation of the material (20) to be ground in the mill (6),
the motor (16) is then disconnected from the first converter (25),
and, in a further step, the motor (16) is connected to a first supply (21),
which has a first supply voltage, and
wherein the maximum output voltage of the first converter (25) lower than the first supply voltage.

2. Method according to claim 1,
wherein the maximum output voltage of the first converter (25) is defined as max. 50% of the first supply voltage of the first supply (21).

3. Method according to one of claims 1 or 2,
wherein the motor (16) is operated at a constant rated frequency (24) while connected to the first supply (21), wherein the rated frequency (24) is greater than a maximum output frequency of the first converter (25).

4. Method according to claim 3,
wherein the maximum output frequency of the first converter (25) is defined as max. 30% of the rated frequency (24) of the first supply (21).

5. Method according to one of the preceding claims,
wherein the first converter (25) is operated from a second supply (30) providing a second supply voltage.

6. Method according to one of claims 1 to 5,
wherein, after disconnection from the first converter (25) and prior to connection to the first supply (21), the motor (16) is connected to a second converter (37) whose maximum output voltage corresponds to the first supply voltage.

7. Method according to claim 6,
wherein the motor (16) is synchronized with the first supply (21) by the second converter (37).

8. Method according to one of the preceding claims,
wherein at least two motors (16) each assigned to a mill (6) are connected in a time-offset manner at least to the first converter (25).

9. Method according to one of the preceding claims,
wherein a low-voltage converter (26) is used as the first converter (25).

10. Method according to claim 9,
wherein the low-voltage converter (26) is operated from a low-voltage supply (31).

11. Method according to one of the preceding claims,
wherein a medium-voltage supply (22) is used as the first supply (21).

12. Method according to one of claims 6 or 7,
wherein a medium-voltage converter (38) is used as the second converter (37).

13. Control device (35) for carrying out a method according to one of claims 1 to 12.

14. Drive unit (4) having at least one control device (35) according to claim 13.

15. Mill arrangement (2) having at least one drive unit (4) according to claim 14.

## Revendications

1. Procédé de commande d'un moteur (16) pour le démarrage d'un broyeur (6) ayant du produit (20) à broyer, **caractérisé en ce que**
on alimente le moteur (16) d'abord par un premier convertisseur (25) pour défaire une sédimentation du produit (20) à broyer du broyeur (6),
on sépare ensuite le moteur (16) du premier convertisseur (25),
et dans un autre stade, on connecte le moteur (16) à un premier réseau (21), qui a une première tension de réseau, et
dans lequel la tension de sortie maximum du premier convertisseur (25) est plus basse que la première tension de réseau.

2. Procédé suivant la revendication 1,
dans lequel on fixe la tension de sortie maximum du premier convertisseur (25) à 50% au maximum de la première tension du premier réseau (21).

3. Procédé suivant l'une des revendications 1 ou 2,
dans lequel on fait fonctionner le moteur (16) pendant la connexion au premier réseau (21) à une fréquence (24) nominale constante,
dans lequel la fréquence (24) nominale est plus haute qu'une fréquence de sortie maximum du premier convertisseur (25).

4. Procédé suivant la revendication 3,
dans lequel on fixe la fréquence de sortie maximum du premier convertisseur (25) au maximum à 30% de la fréquence (24) nominale du premier réseau (21).

5. Procédé suivant l'une des revendications précédentes,
dans lequel on fait fonctionner le premier convertisseur (25) à partir d'un deuxième réseau (30) ayant une deuxième tension de réseau.

6. Procédé suivant l'une des revendications 1 à 5,
dans lequel on connecte le moteur (16), après la séparation du premier convertisseur (25) et avant la connexion au premier réseau (21), à un deuxième convertisseur (37), dont la tension de sortie maximum correspond à la première tension de réseau.

7. Procédé suivant la revendication 6,
dans lequel on synchronise le moteur (16) au premier réseau (21) par le deuxième convertisseur (37).

8. Procédé suivant l'une des revendications précédentes,
dans lequel on connecte, au moins au premier convertisseur (25), au moins deux moteurs (16), qui sont affectés, respectivement, à un broyeur (6).

9. Procédé suivant l'une des revendications précédentes,
dans lequel on utilise un convertisseur (26) de basse tension comme premier convertisseur (25).

10. Procédé suivant la revendication 9,
dans lequel on fait fonctionner le convertisseur (26) de basse tension à partir d'un réseau (31) de basse tension.

11. Procédé suivant l'une des revendications précédentes,
dans lequel on utilise un réseau (22) de moyenne tension comme premier réseau (21).

12. Procédé suivant l'une des revendications 6 ou 7,
dans lequel on utilise un convertisseur (38) de moyenne tension comme deuxième convertisseur (37).

13. Système (35) de commande conçu pour effectuer un procédé suivant l'une des revendications 1 à 12.

14. Système (4) d'entraînement ayant au moins un système (35) de commande suivant la revendication 13.

15. Agencement (2) de broyeur ayant au moins un système (4) d'entraînement suivant la revendication 14.
